# FASCICULE DE BREVET EUROPEEN

(11) **EP 1 660 369 B1**
(45) Date de publication et mention de la délivrance du brevet: **20.06.2007**
(21) Numéro de dépôt: 04786322.0
(22) Date de dépôt: 18.08.2004
(51) Int. Cl.: B64D 11/06, B60N 2/02

(54) **SIEGE DE VEHICULE A ACTIONNEUR PILOTE**
EINEN GESTEUERTEN STELLANTRIEB UMFASSENDER FAHRZEUGSITZ
VEHICLE SEAT COMPRISING CONTROLLED ACTUATOR

(30) Priorité: 03.09.2003 FR 0310438
(43) Date de publication de la demande: 31.05.2006
(73) Titulaire: Precilec, 89000 Auxerre (FR)
(72) Inventeur: ROBERT, Jean-Claude, F-93340 LE RAINCY (FR); DEVAUX, Raphaël, F-75010 PARIS (FR)
(74) Mandataire: Blot, Philippe Robert Emile
(86) Numéro de dépôt international: PCT/FR2004/002156
(87) Numéro de publication internationale: WO 2005/023648

(56) Documents cités:
- WO-A-03/063650
- US-B1- 6 441 576

## Description

La présente invention concerne un siège de véhicule, du type comportant une structure de siège, au moins un élément mobile par rapport à la structure du siège, au moins un actionneur de manoeuvre du ou de chaque élément mobile, et des moyens de pilotage du ou de chaque actionneur pour amener le siège vers un ensemble de configurations prédéterminées.

Les avions long courrier de transport de passagers permettent de parcourir de très longues distances sans escale. Ainsi, les voyages sont très longs, ceux-ci pouvant dépasser douze heures.

Pendant le vol, les passagers restent assis sur leur siège et n'effectuent que très peu de déplacements.

L'altitude, combinée à la fatigue et à une alimentation souvent inhabituelle provoquent chez certains passagers des accidents vasculaires, et notamment des thromboses.

Pour éviter de tels accidents, il est recommandé aux passagers de quitter régulièrement leur siège pour faire quelques pas dans l'avion afin de favoriser la circulation sanguine. Toutefois, de tels déplacements ne sont pas toujours possibles et certains passagers renoncent à se lever afin de ne pas déranger leurs voisins.

Qui plus est, les sièges sont couramment équipés d'actionneurs électriques permettant de déplacer certain parties mobiles du siège et notamment un repose-jambes et le dossier, cf US 6 441 576. Ainsi, les passagers peuvent configurer leur siège afin d'y trouver une position agréable. Les passagers sont alors peu enclins à se déplacer dans l'avion.

L'invention a pour but de proposer une solution permettant de réduire le nombre d'accidents par thrombose lors de vols long courrier.

A cet effet, l'invention a pour objet un siège de véhicule du type précité, caractérisé en ce qu'il comporte des moyens de séquencement propres à commander le pilotage du ou de chaque actionneur pour amener le siège successivement vers plusieurs configurations prédéterminées distinctes suivant un enchaînement prédéterminé de configurations avec un temps de maintien prédéterminé entre chaque changement de configuration.

Suivant des modes particuliers de réalisation, le siège comporte l'une ou plusieurs des caractéristiques suivantes :
- le temps de maintien prédéterminé entre chaque changement de configuration est compris entre 1 et 30 minutes:

- lesdits moyens de séquencement sont adaptés pour la mise en oeuvre répétée dudit enchaînement prédéterminé de configurations avec un temps mort prédéterminé entre chaque mise en oeuvre dudit enchaînement prédéterminé de configurations ;
- le temps mort prédéterminé entre chaque mise en oeuvre dudit enchaînement prédéterminé de configurations a une durée supérieure au temps de maintien prédéterminé entre chaque changement de configuration ;
- le temps mort a une durée comprise entre 30 minutes et 2 heures ;
- ledit enchaînement prédéterminé de configurations comporte d'abord une succession de configurations suivant un ordre prédéterminé suivie d'une succession des mêmes configurations suivant l'ordre prédéterminé inverse ; et
- il comporte au moins un dispositif auxiliaire piloté par lesdits moyens de pilotage, et lesdits moyens de séquencement sont propres à commander le pilotage du ou de chaque dispositif auxiliaire, lorsqu'une configuration est atteinte lors de la mise en oeuvre dudit enchaînement prédéterminé de configurations.

L'invention sera mieux comprise à la lecture de la description qui va suivre, donnée uniquement à titre d'exemple et faite en se référant aux dessins sur lesquels :
- la figure 1 est une vue schématique d'un siège de véhicule selon l'invention ;
- la figure 2 est un organigramme de l'algorithme de commande du siège selon l'invention ;
- la figure 3 est une vue illustrant schématiquement quatre configurations distinctes prises successivement par le siège lors de la mise en oeuvre de l'algorithme illustré sur la figure 2.

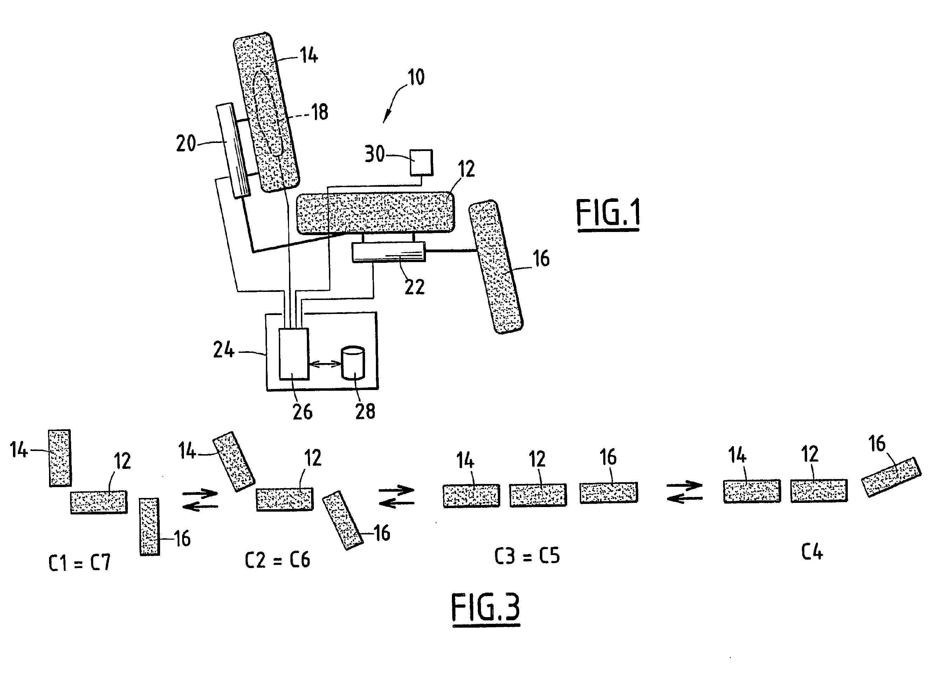

Le siège 10 représenté sur la figure 1 est par exemple un siège d'avion long courrier. Celui-ci comporte une assise 12 à une extrémité arrière de laquelle est articulé un dossier 14 et à l'extrémité avant de laquelle est articulé un repose-jambes 16.

Un dispositif de massage 18, formé par exemple d'un coussin d'air gonflable et dégonflable est intégré dans le dossier 14.

Un actionneur électrique est associé à chaque élément mobile du siège pour assurer son déplacement. Ainsi, un actionneur 20 est installé entre l'assise 12 et le dossier 14 alors qu'un actionneur 22 est installé entre l'assise 12 et le repose-jambes 16.

Le dossier 14 est déplaçable entre une position relevée sensiblement perpendiculaire à l'assise 12 et une position abaissée dans laquelle le dossier est horizontal et prolonge l'assise 12.

Le repose-jambes 16 est déplaçable entre une position abaissée généralement verticale en s'étendant sous l'assise 12 et une position relevée dans laquelle l'extrémité du repose-jambes s'étend à un niveau supérieur à celui de l'assise 12, le repose-jambes et l'assise délimitant un angle par exemple de 30°.

Les actionneurs 20 et 22 sont reliés à une unité centrale de pilotage 24 comprennent des moyens pour assurer leur alimentation en courant électrique afin que les actionneurs se déplacent dans un sens ou dans l'autre.

Comme connu en soi, chaque actionneur est équipé d'un potentiomètre permettant de déterminer sa position courante. Les informations issues des potentiomètres sont transmises à l'unité centrale de pilotage d'informations 24.

L'unité centrale de pilotage 24 comporte une unité de traitement d'informations 26 telle qu'un micro-contrôleur associée à des moyens de stockage 28 pour des programmes de commande du siège et pour des paramètres caractéristiques définissant des configurations prédéterminées pouvant être occupées par le siège.

L'unité 24 permet pour chaque actionneur d'alimenter celui-ci dans un sens déterminé afin que l'actionneur atteigne une position prédéterminée propre à une configuration cible. A cet effet, l'unité de traitement d'informations assure en continu une comparaison de la valeur reçue du potentiomètre de l'actionneur en cause avec un paramètre caractéristique correspondant à la configuration prédéterminée recherchée pour le siège.

L'unité centrale de pilotage 24 est relié à un clavier de commande 30 comportant des touches permettant la commande indépendante dans un sens ou dans l'autre de chacun des actionneurs 20 et 22.

Le clavier comporte en outre des touches permettant d'amener le siège vers différentes configurations prédéterminées. Il comporte en outre une touche permettant de mettre en oeuvre un fonctionnement séquencé du siège permettant d'éviter la thrombose.

De même, le dispositif de massage 18 est relié à l'unité centrale de pilotage 24 pour sa mise en route et son arrêt depuis une touche spécifique du clavier 30.

Selon l'invention, le siège de véhicule comporte des moyens de séquencement propres à commander le pilotage du ou de chaque actionneur pour amener le siège successivement vers plusieurs configurations prédéterminées distinctes suivant un enchaînement prédéterminé de configurations avec un délai prédéterminé entre chaque changement de configuration.

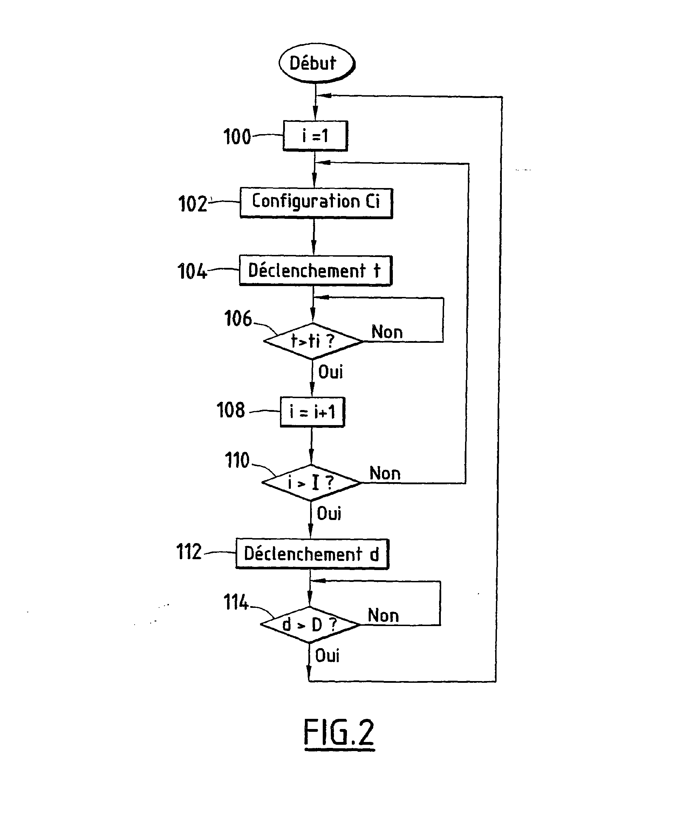

Plus précisément, un programme dont l'algorithme est schématisé sur la figure 2 est stocké dans la mémoire 28 ainsi qu'une table de séquencement telle que la table 1 reprenant les différentes configurations et leur temps de maintien. L'unité de traitement d'informations est propre à mettre en oeuvre l'algorithme de la figure 2 lors de l'appui sur une touche prédéterminée du clavier 30.

**Tableau 1**

| Configuration | Actionneur 20 | Actionneur 22 | Disposition 18 | tᵢ |
|---|---|---|---|---|
| C₁ | 100 | 0 | éteint | 10' |
| C₂ | 70 | 20 | actif | 15' |
| C₃ | 0 | 100 | éteint | 8' |
| C₄ | 0 | 130 | éteint | 5' |
| C₅ | 0 | 100 | éteint | 4' |
| C₆ | 70 | 20 | actif | 8' |
| C₇ | 100 | 0 | éteint | 5' |

La table de séquencement 1 comporte, pour toutes les configurations prédéterminées devant être prises successivement par le siège, les paramètres caractéristiques de ces configurations pour les actionneurs 20 et 22. Elle comporte en outre le temps de maintien tᵢ pour chaque configuration Cᵢ.

Le temps tᵢ de maintien d'une configuration est de préférence compris entre 1 minute et une demi-heure.

De même, l'état du dispositif de massage 18 pour chaque configuration est donné par la table de séquencement.

Chacune des configurations est notée de C₁ à C₇ dans l'exemple considéré.

Sur la figure 2 est illustré l'algorithme mis en oeuvre par l'unité de traitement d'informations pour le fonctionnement séquencé du siège.

Lors de la commande du fonctionnement séquencé, par appui sur la touche appropriée du clavier 26, un paramètre i d'un compteur des configurations est initialisé à la valeur 1 à l'étape 100.

A l'étape 102, le siège est immédiatement amené dans la configuration Cᵢ. En l'espèce, il s'agit initialement de la configuration C₁. Cette configuration est telle que le dossier et le repose-jambes sont verticaux, comme illustré sur la figure 3.

Pour amener le siège dans cette configuration, les paramètres propres à la configuration devant être atteinte sont lus dans la table 1 et les actionneurs sont amenés dans la position souhaitée correspondant par mise en oeuvre d'un algorithme connu par l'unité de traitement d'informations 26.

A l'étape 104, un chronomètre est déclenché dès que le siège a atteint la configuration Cᵢ. A l'étape 106, un test est effectué pour déterminer si la durée t indiquée par le chronomètre depuis laquelle le siège a été dans la configuration C₁ est supérieure au temps de maintien tᵢ indiqué pour cette configuration dans la table 1. Tant que la durée t est inférieure à tᵢ, le test est effectué en boucle. La durée de maintien est par exemples de 10 minutes pour la configuration C₁ du siège.

Pendant cette phase, chacun des actionneurs 20 et 22 peut être mis en oeuvre par une commande individuelle issu du clavier 26. Toutefois, cette modification éventuelle de la configuration n'influe pas sur la mise en oeuvre ultérieure du procédé de séquencement.

Dès que la durée t est supérieure au temps de maintien prédéterminée tᵢ, la variable i du compteur est incrémentée à l'étape 108. Il est vérifié à l'étape 110 si la variable i du compteur n'a pas atteint une valeur 1 représentant le nombre maximal de configurations dans la table 1. Si tel n'est pas le cas, les étapes 102 à 108 sont mises en oeuvre pour la configuration suivante mentionné dans la table 1.

Ainsi, par exemple, à partir de la configuration C₁ précédemment décrite, le siège est amené dans une configuration C₂ illustrée sur la figure 3 dans laquelle le dossier est légèrement rabattu, par exemple d'un angle de 30° alors que le repose-jambes est légèrement relevé, par exemple, d'un angle de 20°. Le temps de maintien dans cette configuration est fixé à 15 minutes. Pendant ces 15 minutes, le dispositif de massage 18 est activé automatiquement.

Dans la configuration C₃, le dossier 14 et le repose-jambes 16 sont tous deux horizontaux et prolongent l'assise à chacune de ses extrémités de sorte que le passager est totalement allongé. Cette configuration est maintenue pendant 8 minutes alors que le dispositif de massage est éteint.

A l'issue des 8 minutes de maintien de la configuration C₃, le siège est amené automatiquement dans la configuration C₄ dans laquelle le repose-jambes 16 est relevé au maximum et délimite un angle de 30° avec l'assise. Le dossier 14 est maintenu dans le prolongement de l'assise et le dispositif de massage est maintenu éteint.

A l'issue des 5 minutes de maintien de cette configuration, les configurations C₅, C₆ et C₇ sont successivement prises par le siège.

Ces configurations correspondent respectivement aux configurations C₃, C₂ et C₁ précédemment définies. Leurs temps de maintien sont toutefois réduits et sont fixés respectivement à 4, 7 et 5 minutes.

Ainsi, les configurations successivement occupées par le siège suivant un premier ordre sont à nouveau occupées suivant un ordre inverse.

Après que le siège a été amené dans chacune des configurations contenues dans la table de séquencement, c'est-à-dire que le test de l'étape 110 est positif, un nouveau chronomètre est déclenché à l'étape 110. Lorsque la durée d définie par ce chronomètre dépasse une durée prédéterminée D définissant un temps mort lors du test effectué à l'étape 114, les étapes 100 et suivantes sont à nouveau mises en oeuvre de sorte que le siège est à nouveau amené séquentiellement dans chacune des configurations prédéfinies dans la table 1. La durée du temps mort D est de préférence supérieure aux temps de maintien tᵢ des configurations utilisés pour le test de l'étape 106. Ainsi, cette durée D est de préférence comprise entre une demi-heure et deux heures.

On comprend qu'avec un tel siège, lors de vols long courrier, le passager peut par simple appui sur une touche prédéterminée du clavier assurer que son siège change régulièrement de configuration, évitant que le sang ne s'accumule en certaines régions du réseau artériel et veineux. Ainsi, les risques de thrombose se trouvent réduits.

De plus de laps de temps substantiels séparant les mouvements du siège d'une configuration prédéterminée vers la configuration suivante permettent aux passagers de ne pas avoir le sentiment d'être constamment malmené par son siège, tout en assurant un changement de position régulier.

## Revendications

1. Siège de véhicule (10) comportant une structure de siège (12), au moins un élément mobile (14, 16) par rapport à la structure du siège (12), au moins un actionneur (20, 22) de manoeuvre du ou de chaque élément mobile (14, 16), et des moyens (24) de pilotage du ou de chaque actionneur (20 , 22) pour amener le siège vers un ensemble de configurations prédéterminées, **caractérisé en ce qu'**il comporte des moyens de séquencement (24) propres à commander le pilotage du ou de chaque actionneur (20, 22) pour amener le siège successivement vers plusieurs configurations prédéterminées distinctes suivant un enchaînement prédéterminé de configurations avec un temps de maintien (tᵢ) prédéterminé entre chaque changement de configuration.

2. Siège de véhicule selon la revendication 1, **caractérisé en ce que** le temps de maintien (tᵢ) prédéterminé entre chaque changement de configuration est compris entre 1 et 30 minutes.

3. Siège de véhicule selon la revendication 1 ou 2, **caractérisé en ce que** lesdits moyens de séquencement (24) sont adaptés pour la mise en oeuvre répétée dudit enchaînement prédéterminé de configurations avec un temps mort prédéterminé (D) entre chaque mise en oeuvre dudit enchaînement prédéterminé de configurations.

4. Siège de véhicule selon la revendication 3, **caractérisé en ce que** le temps mort (D) prédéterminé entre chaque mise en oeuvre dudit enchaînement prédéterminé de configurations a une durée supérieure au temps de maintien (tᵢ) prédéterminé entre chaque changement de configuration.

5. Siège de véhicule selon la revendication 4, **caractérisé en ce que** le temps mort (D) a une durée comprise entre 30 minutes et 2 heures.

6. Siège de véhicule selon l'une quelconque des revendications précédentes, **caractérisé en ce que** ledit enchaînement prédéterminé de configurations comporte d'abord une succession de configurations suivant un ordre prédéterminé suivie d'une succession des mêmes configurations suivant l'ordre prédéterminé inverse.

7. Siège de véhicule selon l'une quelconque des revendications précédentes, **caractérisé en ce qu'**il comporte au moins un dispositif auxiliaire (18) piloté par lesdits moyens de pilotage, et **en ce que** lesdits moyens de séquencement (24) sont propres à commander le pilotage du ou de chaque dispositif auxiliaire (18), lorsqu'une configuration est atteinte lors de la mise en oeuvre dudit enchaînement prédéterminé de configurations.

## Claims

1. Vehicle seat (10) comprising a seat structure (12), at least one element (14, 16) which is mobile relative to the structure (12) of the seat, at least one actuator (20, 22) for operating the or each mobile element (14, 16), and means (24) for controlling the or each actuator (20, 22) in order to bring the seat into a set of predetermined configurations, **characterized in that** it comprises sequencing means (24) suitable for operating the control of the or each actuator (20, 22) in order to bring the seat into several different predetermined configurations in succession in accordance with a predetermined sequence of configurations with a predetermined hold time (tᵢ) between each change of configuration.

2. Vehicle seat according to claim 1, **characterized in that** the predetermined hold time (tᵢ) between each change of configuration is from 1 to 30 minutes.

3. Vehicle seat according to claim 1 or 2, **characterized in that** the sequencing means (24) are suitable for the repeated implementation of the predetermined sequence of configurations with a predetermined idle time (D) between each implementation of the predetermined sequence of configurations.

4. Vehicle seat according to claim 3, **characterized in that** the predetermined idle time (D) between each implementation of the predetermined sequence of configurations has a duration greater than the predetermined hold time (tᵢ) between each change of configuration.

5. Vehicle seat according to claim 4, **characterized in that** the idle time (D) has a duration of from 30 minutes to 2 hours.

6. Vehicle seat according to any one of the preceding claims, **characterized in that** the predetermined sequence of configurations comprises first of all a succession of configurations according to a predetermined order followed by a succession of the same configurations according to the reverse predetermined order.

7. Vehicle seat according to any one of the preceding claims, **characterized in that** it comprises at least one auxiliary device (18) controlled by the control means, and **in that** the sequencing means (24) are suitable for operating the control of the or each auxiliary device (18) when a configuration is reached during the implementation of the predetermined sequence of configurations.

## Patentansprüche

1. Fahrzeugsitz (10) mit einem Sitzaufbau (12), wenigstens einem Bauelement (14, 16), das bezüglich des Sitzaufbaus (12) beweglich ist, wenigstens einer Betätigungseinrichtung (20, 22) zum Betätigen des oder jedes beweglichen Bauelementes (14, 16) und Einrichtungen (24) zum Steuern der oder jeder Betätigungseinrichtung (20, 22), um den Sitz in eine Gruppe von vorbestimmten Formen zu bringen, **dadurch gekennzeichnet, dass** er Folgesteuereinrichtungen (24) umfasst, die so ausgestaltet sind, dass sie die Steuerung der oder jeder Betätigungseinrichtung (20, 22) so bewirken, dass der Sitz der Reihe nach in mehrere bestimmte unterschiedliche Formen in einer bestimmten Kette von Formen mit einer bestimmten Haltezeit (tᵢ) zwischen jeder Formänderung gebracht wird.

2. Fahrzeugsitz nach Anspruch 1, **dadurch gekennzeichnet, dass** die bestimmte Haltezeit (tᵢ) zwischen jeder Formänderung zwischen 1 und 30 Minuten liegt.

3. Fahrzeugsitz nach Anspruch 1 oder 2, **dadurch gekennzeichnet, dass** die besagten Folgesteuereinrichtungen (24) so ausgebildet sind, dass sie die besagte bestimmte Kette von Formen mit einer bestimmten Totzeit (D) zwischen jeder Ausführung der besagten bestimmten Ketten von Formen wiederholt ausführt.

4. Fahrzeugsitz nach Anspruch 3, **dadurch gekennzeichnet, dass** die bestimmte Totzeit (D) zwischen jeder Ausführung der besagten bestimmten Kette von Formen eine Dauer hat, die über der bestimmten Haltezeit (tᵢ) zwischen jeder Formänderung liegt.

5. Fahrzeugsitz nach Anspruch 4, **dadurch gekennzeichnet, dass** die Totzeit (D) eine Dauer zwischen 30 Minuten und 2 Stunden hat.

6. Fahrzeugsitz nach einem der vorhergehenden Ansprüche, **dadurch gekennzeichnet, dass** die besagte bestimmte Kette von Formen zuerst eine Folge von Formen in einer bestimmten Reihenfolge umfasst, auf die eine Folge der gleichen Formen in der umgekehrten bestimmten Reihenfolge folgt.

7. Fahrzeugsitz nach einem der vorhergehenden Ansprüche, **dadurch gekennzeichnet, dass** er wenigstens eine Hilfseinrichtung (18) umfasst, die von den besagten Steuereinrichtungen gesteuert wird, und dass die besagten Folgesteuereinrichtungen (24) die Steuerung der oder jeder Hilfseinrichtung (18) anweisen können, wenn eine Form während der Ausführung der besagten Kette von Formen erreicht ist.
